# EUROPÄISCHE PATENTSCHRIFT

(11) **EP 3 910 245 B1**
(45) Veröffentlichungstag und Bekanntmachung des Hinweises auf die Patenterteilung: **04.12.2024**
(21) Anmeldenummer: 21170619.7
(22) Anmeldetag: 27.04.2021
(51) Int. Cl.: F24C 15/10, A47J 43/07

(54) **KOCHFELD MIT EINER AUFNAHMEVORRICHTUNG FÜR EINE MULTIFUNKTIONSKÜCHENMASCHINE**
HOB WITH A HOLDING DEVICE FOR A MULTIFUNCTION KITCHEN MACHINE
PLAQUE DE CUISSON AVEC UN DISPOSITIF DE RÉCEPTION POUR UN ROBOT MÉNAGER

(30) Priorität: 11.05.2020 DE 102020112617
(43) Veröffentlichungstag der Anmeldung: 17.11.2021
(73) Patentinhaber: Miele & Cie. KG, 33332 Gütersloh (DE)
(72) Erfinder: Wilkens, Henrik, 49080 Osnabrück (DE); Bergmeier, Kai, 32278 Kirchlengern (DE); Ennen, Volker, 32257 Bünde (DE); Bergmeier, Tino, 32257 Bünde (DE); Hormann, Michael, 33332 Gütersloh (DE); Thomas, Sebastian, 85293 Reichertshausen (DE); Micola von Fürstenrecht, Marco, 49324 Melle (DE)

(56) Entgegenhaltungen:
- WO-A1-2014/033652
- DE-A1- 102017 101 168
- US-A1- 2008 264 927

## Beschreibung

Die Erfindung betrifft ein Kochfeld mit einer Aufnahmevorrichtung für eine Multifunktionsküchenmaschine.

Die Basisstationen von Multifunktionsküchenmaschinen sind groß, sperrig und unhandlich. Die Integration der Funktionalitäten der Stationen in eine Arbeitsplatte, wie beispielsweise eine Kochfeldplatte, machen diese überflüssig und schaffen mehr Raum in der Küche. Während des Betriebs einer Multifunktionsküchenmaschine können während der Nahrungszubereitung starke Vibrationen auftreten. Diese werden bei Standgeräten über Stabilisierungseinrichtungen abgefangen, welche sich über nahezu die gesamte Gerätehöhe erstrecken. Solche Stabilisierungseinrichtungen sind insbesondere in einem Kochfeld unerwünscht, da sie das Kochen und Reinigen erschweren oder bei Nichtgebrauch der Multifunktionsküchenmaschine den Bewegungsfreirum insbesondere am Kochfeld einschränken.

Gattungsgemäße Kochfelder sind aus den Druckschriften US 2008 264 927 A1, DE 10 2017 101 168 A1 und WO 2014 033 652 A1 bekannt.

Der Erfindung stellt sich die Aufgabe ein verbessertes Kochfeld mit einer Aufnahmeeinrichtung für eine Multifunktionsküchenmaschine zu schaffen.

Erfindungsgemäß wird diese Aufgabe durch ein Kochfeld mit den Merkmalen des Anspruch 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der platzsparenden Integration in eine Arbeitsplatte darin, dass insbesondere im Gegensatz zu ausfahrbaren Fixierungen keine zusätzlichen Ausschnitte in der Arbeitsplatte nötig sind.

Es wird eine Aufnahmevorrichtung zum Aufnehmen eines mobilen Funktionsmoduls einer Multifunktionsküchenmaschine vorgestellt, wobei die Aufnahmevorrichtung an einer Arbeitsplatte des Kochfeldes befestigt ist und eine Stabilisierungseinrichtung zum Stabilisieren des Funktionsmoduls aufweist. Die Aufnahmevorrichtung ist in Einbaulage vollständig oder zu mehr als 60 Prozent ihrer Bauhöhe unterhalb der Ebene der Oberfläche der Arbeitsplatte angeordnet.

Erfindungsgemäß ist vorgesehen, dass die Stabilisierungseinrichtung mindestens einen beweglichen Haltekörper umfasst, der bei eingesetztem Funktionsmodul in eine Aussparung an dem Funktionsmodul verfahrbar ist.

Das Stabilisieren des Funktionsmoduls umfasst, dass das Funktionsmodul an der Basisvorrichtung lösbar fixiert werden kann um ein ungewolltes Trennen des Funktionsmoduls von der Basisvorrichtung zu vermeiden, beispielsweise ein Trennen bei laufendem Motor zu unterbinden. Stabilisieren des Funktionsmoduls bedeutet aber auch, dass die im Betrieb der Multifunktionsküchenmaschine auftretenden Kräfte derart aufgenommen werden können, dass das Funktionsmodul auf der Basisvorrichtung oder gar das Funktionsmodul mit der Basisvorrichtung wenig Auslenkung quer zur Wirkungsrichtung der Schwerkraft erfährt.

Bei der Multifunktionsküchenmaschine kann es sich um ein zur Zubereitung von Speisen geeignetes Gerät ähnlich einem Mixer handeln, bei dem ein Topf oder ein als Topfmodul bezeichnetes Funktionsmodul mit einer Basisstation gekuppelt werden kann. Die hier vorgestellte Aufnahmevorrichtung kann mitsamt der Stabilisierungseinrichtung beispielsweise mit einer Arbeitsplatte eines Küchenmöbels oder einer als Arbeitsplatte bezeichneten Kochfeldplatte eines Kochfelds verbunden werden. Vorzugsweise ist die Aufnahmevorrichtung, insbesondere mitsamt der Stabilisierungseinrichtung, unter dem Horizont einer solchen Arbeitsoder Kochfeldplatte angeordnet, wodurch sie im direkten Arbeitsumfeld eines Nutzers nicht sichtbar sein kann. Die Arbeitsplatte kann Teil eines Geräts, wie beispielsweise eines Herds sein, oder Teil eines Möbelstücks. Mit dem Begriff unter dem Horizont ist zu verstehen, dass die Aufnahmevorrichtung in Einbaulage vollständig oder zu mehr als 60 Prozent ihrer Bauhöhe unterhalb der Ebene der Oberfläche der Arbeitsplatte angeordnet ist.

Bei der Multifunktionsküchenmaschine kann es sich um ein zur Zubereitung von Speisen geeignetes Gerät handeln, bei dem ein Funktionsmodul mit einer Basisstation gekuppelt werden kann. Vorzugsweise ist dabei vorgesehen, dass das Funktionsmodul als ein Topfmodul zur Aufnahme der Speise ausgeführt ist. Bei dem hier vorgestellten Gerät ist die Basisvorrichtung durch eine entsprechende Öffnung in eine Arbeitsplatte eines Kochfeldes zugänglich, wodurch sie aus dem direkten Arbeitsumfeld des Nutzers optisch verschwinden kann. Das Funktionsmodul kann dabei im auf die Basisstation aufgesetzten Zustand zum Beispiel über eine lösbare Kupplung mit der Basisstation verbunden sein, sodass es einfach abgenommen werden kann um es beispielsweise zu reinigen oder in einem Schrank zu verstauen. Die Arbeitsplatte ist Teil eines erfindungsgemäßen Kochfeldes.

Das Funktionsmodul kann alternativ zu einem Topfmodul auch als Fleischwolfmodul oder als Entsaftermodul oder als Nudelmaschinenmodul ausgeführt sein. Die Multifunktionsküchenmaschine ist insofern als System zu verstehen, als dass die Multifunktionsküchenmaschine als Verkaufseinheit mit einem Topfmodul und/oder einem Fleischwolfmodul und/oder einem Entsaftermodul angeboten wird. Topfmodul und/oder Fleischwolfmodul und/oder Entsaftermodul können aber auch als separat nachkaufbare Einheiten verstanden werden.

Erfindungsgemäß umfasst die Stabilisierungseinrichtung mindestens einen beweglichen Haltekörper, der bei eingesetztem Funktionsmodul in eine Aussparung verfahrbar ist. Dabei ist der Haltekörper an der Basisvorrichtung ausgebildet und die Aussparung an dem Funktionsmodul. Es ist aber auch möglich, dass an dem Funktionsmodul der Haltekörper und an der Basisvorrichtung die Aussparung vorgesehen ist. Auch können mehrere Aussparungen und mit diesen formschlüssig koppelbare Haltekörper vorhanden sein, welche an der Basisvorrichtung und dem Funktionsmodul sortenrein oder gemischt angeordnet sind.

Die Aussparung am Funktionsmodul kann beispielsweise in Form einer umlaufenden Nut ausgeformt sein. Beim Einsetzen des Tropfmoduls in die Aufnahmevorrichtung können ein oder mehrere bewegliche Haltekörper in Form von beispielsweise Bolzen oder Schienen in diese Nut verfahren werden um das Funktionsmodul bei Inbetriebnahme zu stabilisieren. Ein solches Verfahren der Haltekörper kann sowohl manuell als auch automatisch durchgeführt werden. Vorteilhafterweise kann eine solche Stabilisierungseinrichtung ohne großen zusätzlichen Materialaufwand eingebaut und von einem Nutzer einfach gehandhabt werden.

Erfindungsgemäß umfasst die Aufnahmevorrichtung eine Basisvorrichtung der Multifunktionsküchenmaschine, wobei die Basisvorrichtung einen Antrieb mit einer Antriebswelle zum Antreiben eines rotierbaren Elements des Funktionsmoduls aufweist.

Bei dem Antrieb kann es sich beispielsweise um einen Motor beziehungsweise einen Mixermotor handeln, der über die Antriebswelle lösbar mit einer Funktionsmodulwelle gekuppelt werden kann, um das rotierbare Element, beispielsweise Messer zum Zerkleinern von Nahrungsmitteln, anzutreiben. Dabei kann eine solche Basisvorrichtung in verbautem Zustand vollständig unter dem Horizont der Arbeitsplatte versenkt angeordnet sein. Vorteilhafterweise können so die Funktionen einer Küchenmaschine beziehungsweise einer Multifunktionsküchenmaschine direkt in eine Arbeitsplatte oder ein Kochfeld integriert werden. Gemäß einer weiteren Ausführungsform kann die Stabilisierungseinrichtung eine Erhebung um die Antriebswelle aufweisen, die ausgeformt sein kann um bei eingesetztem Funktionsmodul in eine entsprechende Vertiefung am Modulboden hineinzuragen. Beispielsweise kann die Stabilisierungseinrichtung im Bereich direkt um die Antriebswelle eine eckige Erhebung ausformen, die passgenau in eine ebenfalls eckige Vertiefung am Modulboden greifen kann. Vorteilhafterweise wird so eine Zusatzkupplung geschaffen, die ohne zusätzlichen Materialaufwand oder technische Zusätze realisierbar und dadurch kaum störungsanfällig ist.

Die Erhebung kann auch um eine elektrische Verbindung zwischen Basisvorrichtung und Funktionsmodul, insbesondere einen an der Basisvorrichtung befestigten Steckkontakt, ausgebildet sein.

Gemäß einer weiteren Ausführungsform kann die Aufnahmevorrichtung einen Einsatz zum Abdichten der Basisvorrichtung gegenüber der Arbeitsplatte umfassen, wobei der Einsatz eine Durchgangsöffnung für die Antriebswelle und/oder die Stabilisierungseinrichtung mindestens eine Raste am Einsatz zum Aufnehmen eines am Funktionsmodul angeordneten Haltepins aufweisen kann. Beispielsweise kann es sich bei dem Einsatz um eine schalenförmig ausgeformte Blende handeln, die in Betriebszustand auf der Basisstation aufliegt und diese vor eindringenden Flüssigkeiten schützt. Ein solcher Einsatz kann neben seiner Dichtfunktion dazu genutzt werden am Funktionsmodul angeordnete Haltepins in entsprechenden Rasten aufzunehmen. Dabei kann es sich bei solchen Halteelementen um einfache horizontale Stifte, also Haltepins, handeln. Die Halteelemente können alternativ so gestaltet sein, dass sie auch durch eine leichte Drehbewegung in entsprechenden Gegenstücken untergehakt oder zum Beispiel durch einen Push-Pull-Mechanismus eingerastet werden können. Die am Funktionsmodul angeordneten Haltepins können beispielsweise in einer das Funktionsmodul ringförmig umschließenden Dichtung angeordnet sein. Dabei kann es Bereiche von unterschiedlicher Härte geben. Beispielsweise können die Bereiche, welche die Haltepins und das Funktionsmodul verbinden, fester als der Randbereich sein, welcher bei Bewegungen gegebenenfalls mit der Oberfläche einer aufnehmenden Einheit, wie der Arbeitsplatte, in Berührung kommt. Dadurch kann einerseits eine ausreichende Kraftübertragung gewährleistet werden und andererseits kann auch eine eventuelle Beschädigung der Arbeitsplatte, insbesondere wenn es sich dabei um eine Platte aus Glaskeramik handelt, verhindert werden. Um ein besseres optisches Erscheinungsbild des Behälters, des Funktionsmoduls, im ausgebauten Zustand zu erreichen, können die Haltepins am Funktionsmodul in einem schürzenartigen Aufbau gegenüber Blicken von oben und von der Seite ganz oder teilweise verdeckt werden. Diese Ausführungsform der Aufnahmevorrichtung hat den Vorteil, dass die Stabilisierungseinrichtung zusätzlich zu ihrer stabilisierenden Funktion auch eine Dichtfunktion erfüllt. Der Einsatz dient auch zum Schutz der Basisvorrichtung gegenüber durch die Öffnung in der Arbeitsplatte eindringende Flüssigkeiten. Vorzugsweise ist der Einsatz kinematisch entkoppelt von der Aufnahmekammer und der Arbeitsplatte ausgeführt. Hierdurch wird die Genauigkeit der Gewichtssensoren verbessert.

Die Aufnahmevorrichtung kann einen Einsatz zum Abdichten der Basisvorrichtung gegenüber der Arbeitsplatte umfassen, wobei die Stabilisierungseinrichtung mindestens ein aus dem Einsatz herausragendes Halteelement umfassen kann, das bei eingesetztem Funktionsmodul in eine entsprechende Öffnung an einer Moduldichtung hineinragen kann. Alternativ zu den zuvor beschriebenen stiftförmigen Haltepins am Funktionsmodul können also an den Seiten des Funktionsmoduls nach unten zeigende Öffnungen mit Haltenasen vorhanden sein. Entsprechend können im Einsatz passende hammerförmige Halteelemente angeordnet sein, welche in die Öffnungen eintauchen und durch ein Verdrehen der Halteelemente relativ zueinander hinter den Haltenasen in den Öffnungen einrasten können. Die relative Verdrehung kann durch eine Drehung des Behälters beziehungsweise des Funktionsmoduls oder durch eine Bewegung der hammerförmigen Halteelemente erfolgen. Dies kann zum Beispiel realisiert werden, indem die hammerförmigen Halteelemente auf einem ringförmigen gemeinsamen Trägerelement befestigt werden, welches mittels eines eigenen Motors oder über den Antrieb der Basisvorrichtung bewegt wird. In einer Variante unter Verwendung des Antriebs der Basisvorrichtung können beidseitig Haltenasen in den Öffnungen im Funktionsmodul vorhanden sein. Vorteilhafterweise kann auch die hier beschriebene Ausführungsform gleichzeitig als Stabilisierung und als Dichtung verwendet werden. Der Einsatz dient auch zum Schutz der Basisvorrichtung gegenüber durch die Öffnung in der Arbeitsplatte eindringende Flüssigkeiten. Vorzugsweise ist der Einsatz kinematisch entkoppelt von der Aufnahmekammer und der Arbeitsplatte ausgeführt. Hierdurch wird die Genauigkeit der Gewichtssensoren verbessert.

Gemäß einer weiteren Ausführungsform kann die Stabilisierungseinrichtung zumindest eine Ausnehmung zum Aufnehmen eines seitlich am Funktionsmodul angeordneten Haltekörpers und ein Führungselement, insbesondere einen drehbaren Fixierungsring, zum Verschließen der Ausnehmung umfassen. Dabei kann der Fixierungsring zum Beispiel als drehbarer Bajonettring ausgeformt sein. Vorteilhafterweise kann die Position des Funktionsmoduls in der Stabilisierungseinrichtung auf diese Weise gesichert und ein Entfernen des Funktionsmoduls während eines Einsatzes verhindert werden. Der Haltekörper und/oder die Ausnehmung am Funktionsmodul kann ein Stift oder Bolzen sein. Es ist aber auch möglich, den Haltekörper und/oder die Ausnehmung am Funktionsmodul als um das Funktionsmodul umlaufende, unterbrochene Erhebung, zum Beispiel in Form von keilförmigen Kreisausschnitten auszuführen.

Der Haltekörper muss nicht zwingend in eine Ausnehmung in der Stabilisierungseinrichtungswand eintauchen. Der Haltekörper und/oder die Ausnehmung am Funktionsmodul können auch in einer Stabilisierungseinrichtung mit beispielsweise glatten Wänden fixiert werden. Wesentlich ist, dass der Haltekörper und/oder die Ausnehmung, beispielsweise durch das Verdrehen des Rings, an einer Bewegung nach oben gehindert werden. Als Weiterbildung ist es denkbar, dass durch eine entsprechende Form des rotierbaren Elements das Funktionsmodul nach unten gedrückt wird, wenn das rotierbare Element in die Schließposition gedreht wird. In der Freigabeposition kann das Funktionsmodul aufgrund einer entsprechenden Aussparung in dem rotierbaren Element nach oben bewegt und entnommen werden.

Die Aufnahmevorrichtung kann außerdem einen Stabilisierungsantrieb zum Bereitstellen eines Drehmoments zum Drehen des Führungselements umfassen. Beispielsweise kann es sich bei dem Stabilisierungsantrieb um einen Motor handeln, der als Teil der Aufnahmevorrichtung ausgeführt sein kann. Das hat den Vorteil, dass der Verschließmechanismus des Fixierrings elektrisch ausgeführt werden kann und möglicherweise fehlerhafte Handgriffe durch den Nutzer vermieden werden. Der Stabilisierungsantrieb neben dem auch als Verriegelungsmotor bezeichneten Motor einen Verriegelungsantrieb und/oder einen Zusatzantrieb aufweisen.

Der Stabilisierungsantrieb kann ferner zum Antreiben eines rotierbaren Elements des Funktionsmoduls ausgebildet sein. In dieser Ausführungsform kann beispielsweise der Antrieb der Basisvorrichtung mit dem Stabilisierungsantrieb übereinstimmen. Beispielsweise kann das Führungselement leicht schleifen oder magnetisch mit dem über die Antriebswelle mit dem Antrieb verbundenen rotierenden Element verbunden sein. Bei einer Bewegung des Antriebs und somit der Antriebswelle kann das Führungselement in der gleichen Drehrichtung mitbewegt werden bis er durch einen Anschlag gestoppt werden kann. Entsprechend kann eine Rotation des Antriebs in die Gegenrichtung das Führungselement wiederum bis in einen Anschlag bewegen. Wenn das Führungselement so gestaltet ist, dass er das Entnehmen des Funktionsmoduls in beiden Anschlagspositionen verhindert, wird durch jede Motorbetätigung automatisch das Funktionsmodul verriegelt. Die Verwendung von nur einem Antrieb hat den Vorteil, dass kein zusätzlicher Stabilisierungsantrieb in die Aufnahmevorrichtung vorgesehen werden muss und somit Kosten, Material und Arbeitsaufwand eingespart werden können.

Gemäß einer weiteren Ausführungsform kann die Stabilisierungseinrichtung ein Gewinde zum Verschrauben mit einem Gegengewinde des Funktionsmoduls umfassen. Eine solche Gewindekupplung kann sowohl manuell als auch automatisch verschraubt werden und hat den Vorteil, dass hierbei auf möglicherweise von einem Nutzer als störend angesehene Ausformungen am Funktionsmodul verzichtet werden kann.

Gemäß einer weiteren Ausführungsform kann die Aufnahmevorrichtung ausgeformt sein um einen Griff des Funktionsmoduls zu fixieren. Beispielsweise kann die Stabilisierungseinrichtung eine Aussparung in der Arbeitsplatte umfassen, in die der Griff eingesetzt werden kann. Das hat den Vorteil, dass diese Stabilisierungseinrichtung ohne großen Material- und Arbeitsaufwand umsetzbar ist und kaum Verschleißerscheinungen auftreten.

Gemäß einer weiteren Ausführungsform kann die Aufnahmevorrichtung einen Deckel zum Verschließen einer an der Arbeitsplatte angeordneten Aufnahmekammer und/oder zum Verschließen einer Öffnung in der Arbeitsplatte umfassen, wobei die Aufnahmevorrichtung in der Aufnahmekammer angeordnet sein kann und ausgebildet sein kann um bei nicht eingesetztem Funktionsmodul den Deckel aufzunehmen. Beispielsweise kann die Aufnahmekammer, die auch als Kupplungsmulde bezeichnet werden kann, bei Nichtbenutzung der Multifunktionsküchenmaschine mit einem geeigneten Deckel flächenbündig verschlossen werden. Die in der Aufnahmevorrichtung verbauten Aufnahmeelemente für Halteelemente an einem Funktionsmodul können gleichzeitig als Aufnahmeelenente für einen solchen Deckel, beziehungsweise eine Abdeckplatte, genutzt werden. In diesem Fall kann zum Beispiel ein Push-Pull-Mechanismus genutzt werden um den Deckel beim Herausnehmen etwas anzuheben und so besser greifbar zu machen. Vorteilhafterweise kann so die Aufnahmekammer leicht verschlossen werden, wodurch sie sich bei Nichtbenutzung der Multifunktionsküchenmaschine optisch an das Umfeld angleicht, ohne dass zusätzliche Elemente für einen Verschluss des Deckels eingebaut werden müssen.

Der Deckel muss nicht flächenbündig mit dem Kochfeld ausgeführt sein. Der Deckel kann auch über die Oberfläche der Arbeitsplatte hinausragen oder, vorzugsweise schalenartig nach unterhalb der Ebene der Oberfläche der Arbeitsplatte ausgeführt sein. Dabei kann der Deckel zur Aufnahme eines Gefäßes dienen und so in Wirkung auf die Basisvorrichtung als Küchenwaage genutzt werden. Hierzu ist es jedoch erforderlich, dass der Deckel relativ zu der Arbeitsplatte beweglich ist und den Einsatz abdeckt. Es könnte optional eine elastische Dichtung zwischen Deckel und der arbeitsplatte eingesetzt sein.

Erfindungsgemäß wird ein Kochfeld mit zumindest einer Kochzone und mit einer Aufnahmevorrichtung gemäß einer der beschriebenen Ausführungsformen vorgestellt, wobei die Aufnahmevorrichtung Bestandteil des Kochfeldes ist.

Eine solche Kombination ist besonders vorteilhaft um die zuvor ausgeführten Vorteile insbesondere während eines Kochvorgang, bei dem möglicherweise auch andere auf dem Kochfeld verwendete Küchengeräte eingesetzt werden, effizient umzusetzen.

Auch wenn der beschriebene Ansatz anhand eines Haushaltgeräts beschrieben wird, kann die hier beschrieben Vorrichtung entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: einen Querschnitt einer Aufnahmeeinrichtung mit Haltekörper gemäß einem Ausführungsbeispiel;
- Figur 2: einen Querschnitt einer Aufnahmeeinrichtung mit Haltekörper und eingesetztem Funktionsmodul gemäß einem Ausführungsbeispiel;
- Figur 3: einen Querschnitt einer Stabilisierungseinrichtung mit einer Erhebung gemäß einem Ausführungsbeispiel;
- Figur 4: eine Draufsicht auf einen Modulboden mit einer Vertiefung gemäß einem Ausführungsbeispiel;
- Figur 5: einen Querschnitt einer Aufnahmeeinrichtung mit Ausnehmungen und eines Funktionsmoduls mit seitlich angebrachten Haltekörper gemäß einem Ausführungsbeispiel;
- Figur 6: eine Draufsicht auf ein Führungselement gemäß einem Ausführungsbeispiel;
- Figur 7: einen Querschnitt einer Aufnahmeeinrichtung mit einem Einsatz mit Rasten gemäß einem Ausführungsbeispiel;
- Figur 8: einen Querschnitt einer Aufnahmeeinrichtung mit einem Einsatz mit Rasten und eingesetztem Funktionsmodul gemäß einem Ausführungsbeispiel;
- Figur 9: einen Querschnitt einer Aufnahmeeinrichtung mit einem Einsatz mit Halteelementen gemäß einem Ausführungsbeispiel;
- Figur 10: einen Querschnitt einer Aufnahmeeinrichtung mit einem Gewinde gemäß einem Ausführungsbeispiel;
- Figur 11: einen Querschnitt einer Aufnahmeeinrichtung mit einem Gewinde und eingesetztem Funktionsmodul gemäß einem Ausführungsbeispiel;
- Figur 12: einen Querschnitt einer Aufnahmeeinrichtung mit einem Gewinde und eingesetztem und verschraubtem Funktionsmodul gemäß einem Ausführungsbeispiel;
- Figur 13: einen Querschnitt einer Aufnahmekammer mit Deckel; und
- Figur 14: eine Draufsicht auf ein Kochfeld mit eingesetztem Funktionsmodul gemäß einem Ausführungsbeispiel;
- Figur 15: einen Querschnitt einer Stabilisierungseinrichtung mit einem motorischen Antrieb gemäß einem Ausführungsbeispiel.

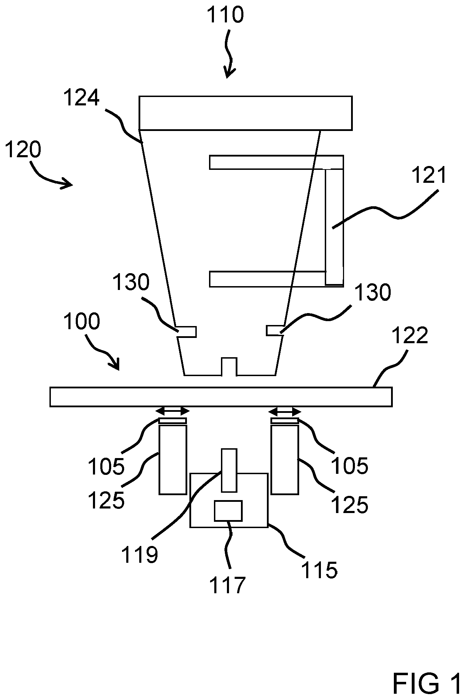

Figur 1 zeigt einen Querschnitt einer Aufnahmeeinrichtung 100 mit Haltekörper 105 gemäß einem Ausführungsbeispiel. Die Aufnahmeeinrichtung 100 ist ausgeformt um ein Funktionsmodul 120 einer Multifunktionsküchenmaschine 110 aufzunehmen. Die Aufnahmeeinrichtung 100 umfasst auch eine Basisvorrichtung 115 mit einem Antrieb 117 und einer Antriebswelle 119 der Multifunktionsküchenmaschine 110. Das mobile Funktionsmodul 120 ist in Form eines Topfmoduls mit einem Behälter 124 zur Aufnahme von Speisen und mit einem Griff 121 ausgestaltet. In diesem Ausführungsbeispiel ist die Basisvorrichtung 115 unterhalb des Horizonts einer Arbeitsplatte 122 angeordnet. Als der Horizont der Arbeitsplatte 122 ist die Ebene der Oberfläche der Arbeitsplatte 122 zu verstehen. Die Multifunktionsküchenmaschine 110 umfasst eine Stabilisierungseinrichtung 125. Diese weist gemäß der gezeigten Ausführungsform in der Nähe der Arbeitsplatte 122, bei der es sich beispielsweise um die Glaskeramikplatte eines Kochfelds handeln kann, zwei Haltekörper 105 auf. Entsprechend der Form und Größe der Haltekörper 105 weist das Funktionsmodul 120 im unteren Bereich zwei zu den Haltekörper korrespondierende Aussparungen 130 auf. Die Haltekörper 105 können als Bolzen oder Stifte ausgeführt sein. Auch ist es möglich, dass die Haltekörper 105 als eine Schiene oder ein Riegel, beispielsweise in Form eines halbkreisförmigen Ringes der in die als Nut ausgebildete Aussparungen 130 greift.

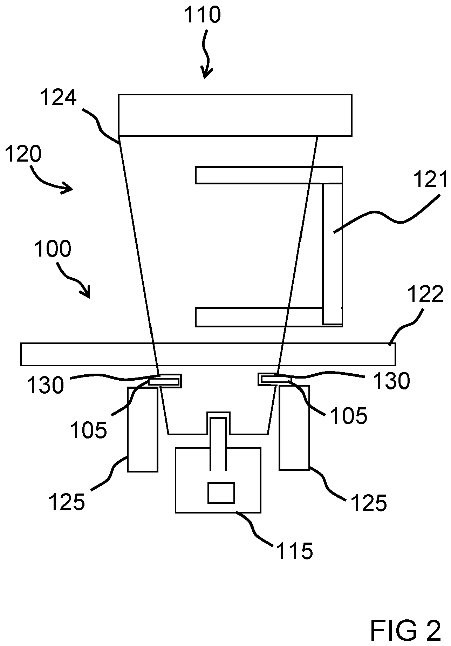

Figur 2 zeigt einen Querschnitt einer Aufnahmeeinrichtung 100 mit Haltekörper 105 und eingesetztem Funktionsmodul 120. In diesem Ausführungsbeispiel ist das Funktionsmodul 120 durch die Arbeitsplatte 122 abgesenkt abgebildet und mit der Basisvorrichtung 115 gekoppelt. Die Haltekörper 105 der Stabilisierungseinrichtung 125 befinden sich in einer Fixierposition, wobei sie in die Aussparungen 130 das Funktionsmoduls 120 hineinragen, wodurch das Funktionsmodul 120 fixiert ist. Die Haltekörper 105 können manuell verfahrbar oder beispielsweise von dem Antrieb 117 ansteuerbar sein.

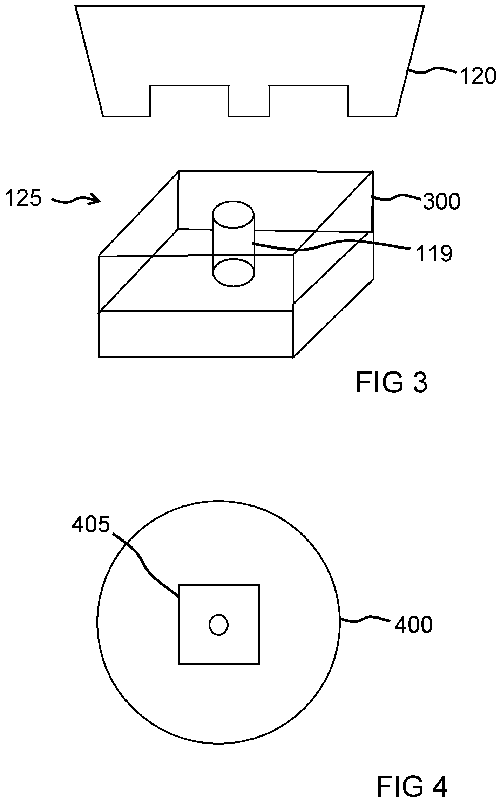

Figur 3 zeigt einen Querschnitt einer Stabilisierungseinrichtung 125 mit einer Erhebung 300 gemäß einem Ausführungsbeispiel. Die hier abgebildete Stabilisierungseinrichtung 125 ist als im Wesentlichen kastenförmige, starre Fixierungseinheit ausgeformt. Zentral durch die Stabilisierungseinrichtung 125 verläuft die Antriebswelle 119, über die das Funktionsmodul 120 an eine Basisvorrichtung 115 gekuppelt werden kann.

Figur 4 zeigt eine Draufsicht auf einen Modulboden 400 mit einer Vertiefung 405 gemäß einem Ausführungsbeispiel. Die Vertiefung 405 entspricht in ihrer Ausformung der in Figur 3 beschriebenen Erhebung. Beim Einsetzen eines Funktionsmoduls 120 kann somit die Erhebung in die Vertiefung 405 greifen um das Funktionsmodul 120 zu stabilisieren.

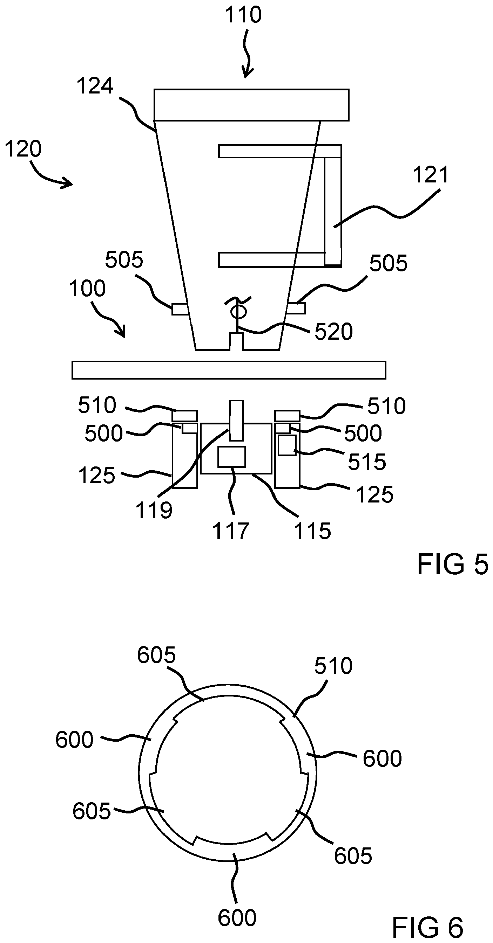

Figur 5 zeigt einen Querschnitt einer Aufnahmeeinrichtung 100 mit Ausnehmungen 500 und einem als Topfmodul ausgeführten Funktionsmodul 120 mit seitlich angebrachten Haltekörpern 105 gemäß einem Ausführungsbeispiel. Die Haltekörper 105 sind als Bolzen 505 ausgeführt und entsprechen in Form und Größe den Ausnehmungen 500. Wenn beispielsweise das Funktionsmodul 120 in die Aufnahmeeinrichtung 100 eingesetzt wird, dann können bei diesem Vorgang die Bolzen 505 in den Ausnehmungen 500 versenkt werden. Über den Ausnehmungen 500 ist ein Führungselement 510 angeordnet, mit dem die Ausnehmungen 500 verschlossen werden können, um das Funktionsmodul 120 im eingesetzten Zustand fest in dieser Position zu fixieren. Das Führungselement 510 kann beispielsweise als Bajonettring ausgeformt und manuell oder automatisch drehbar sein. Zum automatischen Bewegen des Führungselements 510 umfasst die Stabilisierungseinrichtung 125 in diesem Ausführungsbeispiel einen Stabilisierungsantrieb 515, der beispielsweise als von der Multifunktionsküchenmaschine 110 und insbesondere von dem Antrieb 117 unabhängiger Motor ausgebildet sein kann.

Alternativ zu den manuell durch einen Nutzer oder durch den extra dafür vorgesehenen Stabilisierungsantrieb 515 betriebenen Verriegelungsmechanismen kann auch der Antrieb 117 der Basisvorrichtung 115 für die Betätigung des Verschlusses herangezogen werden. So kann zum Beispiel das Führungselement 510 leicht schleifen oder magnetisch mit einem über die Antriebswelle 119 mit dem Antrieb 117 verbundenen rotierenden Element 520 des Funktionsmoduls 120 verbunden sein. Bei der hier gezeigten Ausführungsform ist das rotierende Element 520 in dem Behälter 124 des als Topfmodul ausgeführten Funktionsmoduls 120 angeordnet.

Bei einer Bewegung des Verbindungselements, das heißt der Antriebswelle 119, durch den Antrieb 117 beispielsweise im Uhrzeigersinn kann das Führungselement 510 dadurch ebenfalls im Uhrzeigersinn mitbewegt werden bis er zum Beispiel durch einen Anschlag gestoppt werden kann. Entsprechend kann eine Rotation des Antriebs 117 gegen den Uhrzeigersinn den Ring gegen den Uhrzeigersinn bis in einen Anschlag bewegen. Wenn das Führungselement 510 so gestaltet ist, dass er das Entnehmen des Funktionsmoduls 120 in beiden Anschlagspositionen verhindert, kann durch jede Motorbetätigung automatisch das Funktionsmodul 120 verriegelt werden. Um die Fixierung aufzuheben kann beispielsweise das Führungselement 510 nach dem Erreichen des Stillstands einen definierten Winkel in die der letzten Bewegungsrichtung entgegengesetzte Richtung verfahren werden. In einer näherungsweise mittigen Position können die Rastelemente des Funktionsmoduls 120, das heißt die Haltekörper 105 oder Bolzen 505, unter einer entsprechenden Öffnung im Führungselement liegen und das Topfmodul mit dem Behälter 124, beziehungsweise das Funktionsmodul 120, kann entnommen werden. Wenn dies zum Beispiel automatisch nach jedem Ende jeder Drehbewegung des rotierbaren Elements 520 durchgeführt wird, entsteht dem Nutzer für die Fixierung kein Zusatzaufwand.

Um den Aufwand eines zusätzlichen Ansteuerns eines Motors in Gegenrichtung nach dem Stoppen einer Mixbewegung zu sparen, kann das Zurückstellen des Führungselements 510 automatisiert beispielsweise durch eine Feder oder die Schwerkraft in Verbindung mit entsprechend geformten aufeinander beweglichen Bauteilen erfolgen. Bei diesem Aufbau kann die Fixierung nur solange aufrechterhalten werden, wie durch die Drehbewegung des Antriebs 117 oder des Stabilisierungsantriebs 515 eine Kraft aufgebracht wird, welche zum Beispiel der Federkraft entgegenwirkt.

Beim Absenken des Funktionsmoduls 120 kann das Führungselement 510 durch eine geeignete Einrichtung, zum Beispiel ein trichterförmiges Element, auf dem Führungselement 510 so positioniert werden, dass die Rastelemente des Funktionsmoduls 120 durch die Öffnung im, als Fixierungsring ausgeführten Führungselement 510 durchtauchen können. Alternativ kann die Öffnung motorisch entsprechend platziert werden, zum Beispiel nach dem Einschalten des Geräts. Bei der Verwendung eines rückstellenden Federelements oder einer entsprechenden auf Schwerkraft basierenden Konstruktion kann das Führungselement 510 automatisch in der passenden Position stehen.

Figur 6 zeigt eine Draufsicht auf ein Führungselement 510 gemäß einem Ausführungsbeispiel. Das als Fixierungsring ausgeführte Führungselement 510 ist in diesem Ausführungsbeispiel mit drei in Richtung der Ringmitte vorstehenden Verschlusselementen 600 und zwischen ihnen gelegenen Öffnungen 605 dargestellt. Beim einem Einsatz des Fixierungsrings 510 wie in Figur 5 beschrieben können die am Funktionsmodul 120 angebracht Haltekörper 105 durch die Öffnungen 605 hindurch tauchen, woraufhin das Führungselement 510 so verschoben werden kann, dass die Verschlusselemente 600 über den Haltekörper 105 positioniert werden um das Funktionsmodul 120 so in der Aufnahmeeinrichtung 100 zu fixieren.

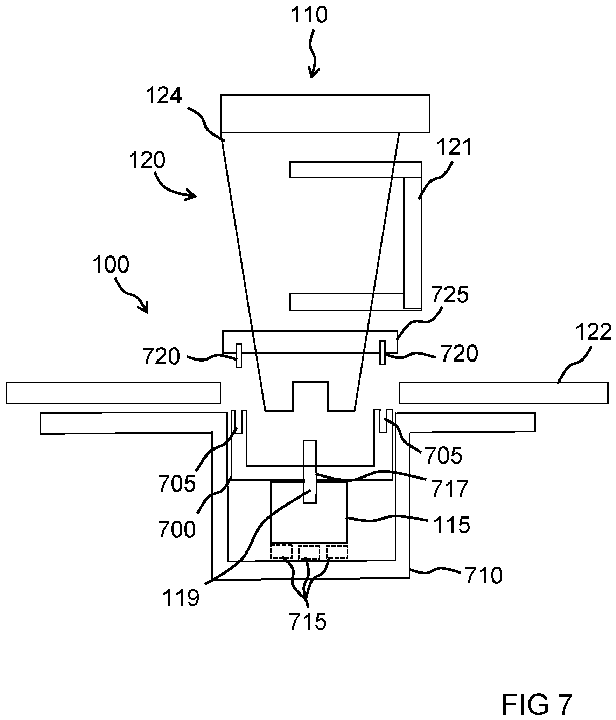

Figur 7 zeigt einen Querschnitt einer Aufnahmeeinrichtung 100 mit einem Einsatz 700 mit Rasten 705 gemäß einem Ausführungsbeispiel. Die Aufnahmeeinrichtung 100 ist in diesem Ausführungsbeispiel in einer Aufnahmekammer 710 unter dem Horizont der Arbeitsplatte 122 angeordnet. In der Aufnahmekammer 710 ist die Basisvorrichtung 115 angeordnet, die auf der Unterseite drei Gewichtssensoren 715 aufweist, während der Einsatz 700 auf der Oberseite aufliegt und eine Durchgangsöffnung 717 für die Antriebswelle 119 aufweist. Der Einsatz 700 ist schalenförmig ausgeformt um beispielsweise von oben eindringende Flüssigkeiten während eines Kochvorgangs aufzufangen. Zudem umfasst der Einsatz 700 in diesem Ausführungsbeispiel zwei Rasten 705, die so ausgeformt sind, dass sie entsprechende Haltepins 720 des Funktionsmoduls 120 aufnehmen können. Die Haltepins 720 sind über eine Moduldichtung 725 mit dem Funktionsmodul 120 verbunden.

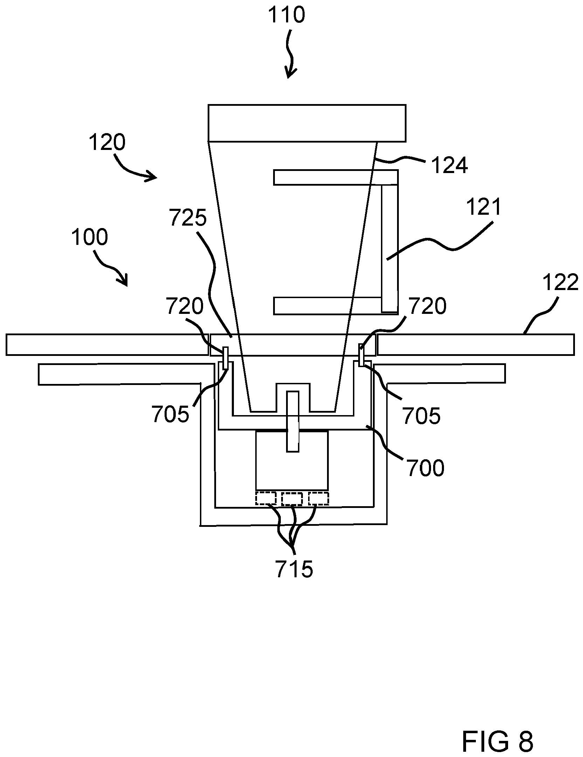

Figur 8 zeigt einen Querschnitt einer Aufnahmeeinrichtung 100 mit einem Einsatz 700 mit Rasten 705 und eingesetztem Funktionsmodul 120 gemäß einem Ausführungsbeispiel. Die Moduldichtung 725 schließt in diesem Ausführungsbeispiel bündig mit der Arbeitsplatte 122 ab und die Haltepins 720 sind in die Rasten 705 versenkt, wodurch das Funktionsmodul 120 während eines Einsatzes stabilisiert werden kann. Um eine Übertragung von Schwingungen auf die Arbeitsplatte 122 zu verringern, können insbesondere im Bereich der Gewichtssensoren 715 schwingungsdämpfende Elemente vorgesehen werden. Dabei kann es sich zum Beispiel um Gummielemente handeln. Zusätzlich oder alternativ können beispielsweise weitere Elemente zur Schwingungsentkopplung im Bereich der Aufhängung der Multifunktionsküchenmaschine 110 an die aufnehmende Einheit, wie der Arbeitsplatte 122, vorgesehen werden. Ein solcher Einsatz von schwingungsdämpfenden Elementen kann auch auf andere Ausführungsbeispiele übertragen werden.

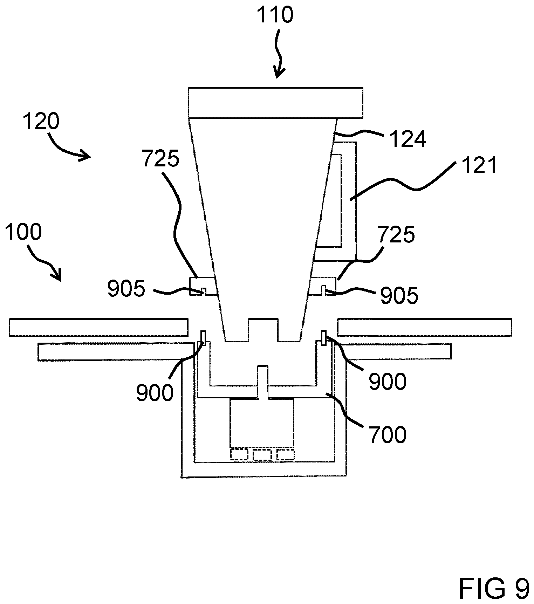

Figur 9 zeigt einen Querschnitt einer Aufnahmeeinrichtung 100 mit einem Einsatz 700 mit Halteelementen 900 gemäß einem Ausführungsbeispiel. Der dargestellte Aufbau der Aufnahmeeinrichtung 100 gleicht in diesem Ausführungsbeispiel dem in Figur 7 und Figur 8 beschriebenen Aufbau, wobei der Einsatz 100 in diesem Ausführungsbeispiel anstelle von Rasten zwei hervorstehende Halteelemente 900 aufweist, die beim Einsetzen eines Funktionsmoduls 120 in an der Moduldichtung 725 angeordnete Fixieröffnungen 905 versenkt werden können.

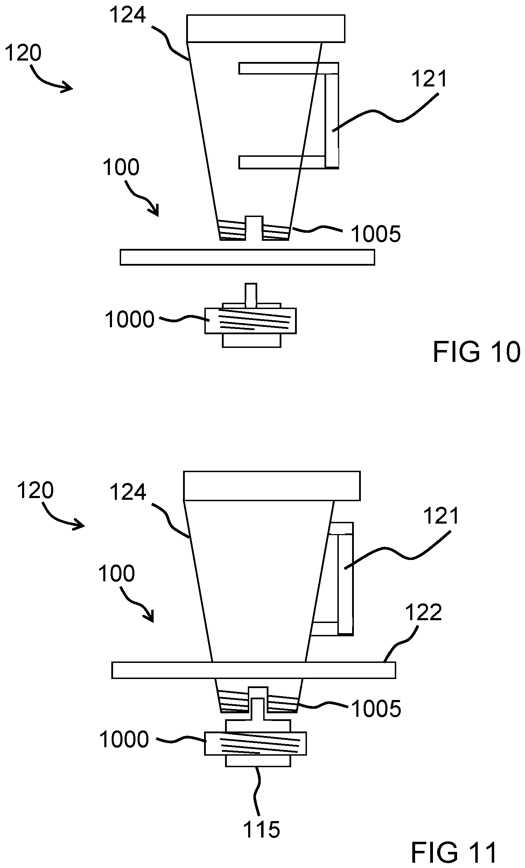

Figur 10 zeigt einen Querschnitt einer Aufnahmeeinrichtung 100 gemäß einem Ausführungsbeispiel, bei der die Stabilisierungseinrichtung 125 ein Gewinde 1000 umfasst. Das Gewinde 1000 ist in diesem Ausführungsbeispiel als drehbare Mutter ausgeformt, die mit einem Gegengewinde 1005 des Funktionsmoduls 120 manuell oder automatisch verschraubt werden kann. Alternativ ist das Gewinde 1000 starr ausgeführt und das Gegengewinde 1005 kann durch Drehen des Funktionsmoduls 120 in das Gewinde 1000 eingedreht werden.

Figur 11 zeigt einen Querschnitt einer Aufnahmeeinrichtung 100 mit einem Gewinde 1000 und eingesetztem Funktionsmodul 120 gemäß einem Ausführungsbeispiel. Dabei kann es sich um das anhand Figur 10 beschriebene Ausführungsbeispiel handeln, wobei das Funktionsmodul 120 in Figur 11 durch die Durchgangsöffnung der Arbeitsplatte 122 abgesenkt und bereits ansatzweise mit der Basisvorrichtung 115 gekuppelt dargestellt ist. Dabei ist das Gewinde 1000 noch nicht mit dem Gegengewinde 1005 verschraubt.

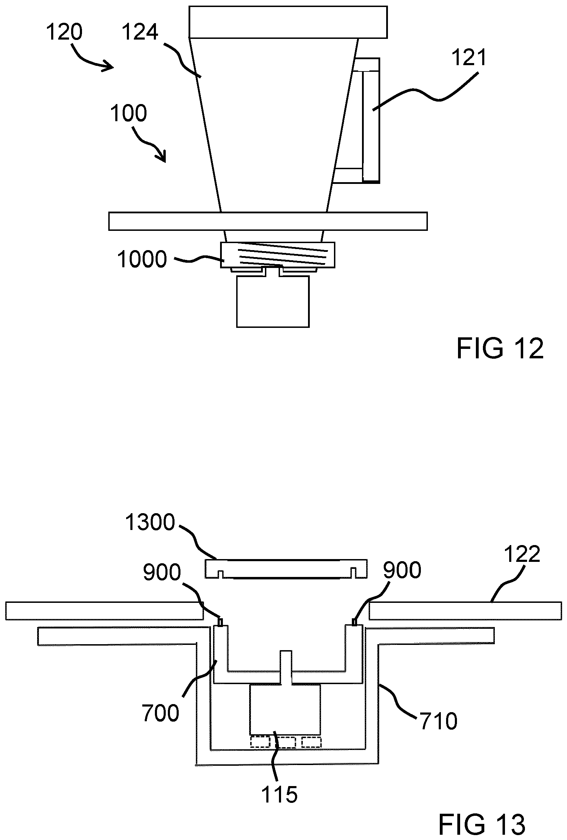

Figur 12 zeigt einen Querschnitt einer Aufnahmeeinrichtung 100 mit einem Gewinde 1000 und eingesetztem und verschraubtem Funktionsmodul 120 gemäß einem Ausführungsbeispiel. Im Vergleich zur Position des Gewindes 1000 in den Figuren 10 und 11 ist das Gewinde 1000 mit dem Gegengewinde 1005 des Funktionsmoduls 120 verschraubt. Während des Verschraubens wird das Gewinde 1000 gemäß diesem Ausführungsbeispiel angehoben, sodass sich das Gewinde 1000 im Vergleich zu den in den Figuren 10 und 11 gezeigten unverschraubten Zuständen in einer erhöhten Position befindet und das Gegengewinde 1005 des Funktionsmoduls 120 umschließt.

Die für eine solche Gewindekupplung nötige Drehbewegung kann manuell durchgeführt werden oder automatisch, wobei ein ähnlicher Ansatz wie für das in Figur 5 beschriebene Führungselement realisierbar ist. In diesem Fall kann auf eine Nutzung einer Drehrichtung verzichtet werden oder es können zusätzliche Maßnahmen getroffen werden um unerwünschte Kraftübertragungen zu verhindern.

Figur 13 zeigt einen Querschnitt einer Aufnahmekammer 710 mit einem Deckel 1300 gemäß einem Ausführungsbeispiel. In der Aufnahmekammer 710 ist die Basisvorrichtung 115 mit einem Einsatz 700 angeordnet, wie in Figur 9 beschrieben. In diesem Ausführungsbeispiel ist der Deckel 1300 so ausgeformt, dass er von den am Einsatz 700 angeordneten Halteelementen 900 aufgenommen werden kann und im eingesetzten Zustand bündig mit der Arbeitsplatte 122 abschließt.

Somit ist die Stabilisierungseinrichtung 125 ausgebildet, um das Funktionsmodul 120 zu fixieren, wenn das Funktionsmodul 120 durch die Durchgangsöffnung in der Arbeitsplatte 122 mit der Basisvorrichtung 115 gekuppelt ist, und ausgebildet, um den Deckel 1300 zu fixieren, wenn die Durchgangsöffnung in der Arbeitsplatte 122 durch den Deckel 1300 abgedeckt ist.

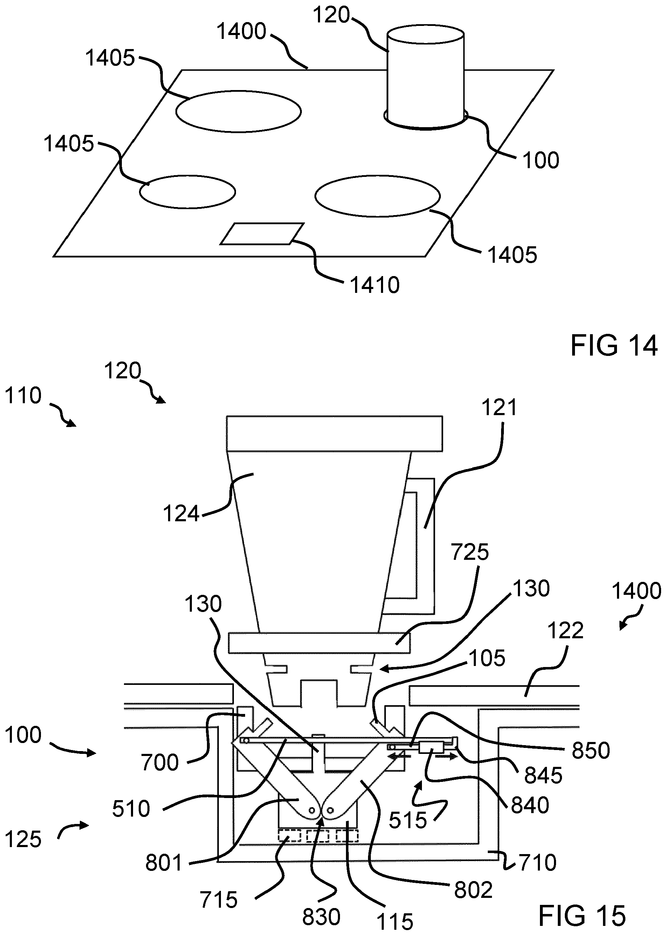

Figur 14 zeigt eine Draufsicht auf ein Kochfeld 1400 mit eingesetztem Funktionsmodul 120 gemäß einem Ausführungsbeispiel. Das Funktionsmodul 120 ist über die Aufnahmevorrichtung 100 mit dem Kochfeld 1400 verbunden. Das Kochfeld 1400 umfasst ferner eine oder mehrere, hier beispielhaft drei Kochzonen 1405 und ein Bedienfeld 1410. Die Kochzonen 1405 können beispielsweise induktiv beheizt werden. Über das Bedienfeld 1410 kann ein Anwender einen Betrieb der Kochzonen 1405 und optional einen Betrieb der das Funktionsmodul 120 umfassenden Multifunktionsküchenmaschine steuern.

Figur 15 zeigt eine Multifunktionsküchenmaschine 110 als Teil eines Kochfeldes 1400. Das Funktionsmodul 120 der Multifunktionsküchenmaschine 110 ist zur Anordnung auf einer Aufnahmeeinrichtung 100 vorgesehen, welche unterhalb einer Arbeitsplatte 122 des Kochfeldes 1400 angeordnet ist. Das Funktionsmodul 120 wird zur Kopplung mit der Aufnahmeeinrichtung 100 zumindest mit einem der Aufnahmeeinrichtung 100 zugewandten Abschnitt durch eine Durchgangsöffnung der Arbeitsplatte 122 geführt. An der Arbeitsplatte 122 ist eine Aufnahmekammer 710 vorgesehen in der die Aufnahmeeinrichtung 100 positioniert und/oder fixiert ist. In der Aufnahmekammer 710 ist ein Einsatz 700 vorgesehen. Der Einsatz 700 ist entweder an der Aufnahmeeinrichtung 100 fixiert und somit ein Teil der Aufnahmeeinrichtung 100 oder der Einsatz 700 ist an der Aufnahmekammer 710 fixiert und somit ein Teil der Aufnahmekammer 710.

Die Aufnahmeeinrichtung 100 umfasst eine Basisvorrichtung 115 mit einem Antrieb 117 und einer Antriebswelle 119. Über die Antriebswelle 119 kann ein bewegliches Werkzeug des Funktionsmoduls 120 der Multifunktionsküchenmaschine 110 angetrieben werden. In dem hier gezeigten Beispiel ist das Funktionsmodul 120 ein Topfmodul mit einem Behälter 124 und einem Griff 121. In dem Behälter 124 ist wie in Figur 5 dargestellt ein rotierbares Element 520 angeordnet, welches mit der Antriebswelle 119 verbunden von dieser angetrieben werden kann. An dem Funktionsmodul 120 ist eine Moduldichtung 725 vorgesehen. Wenn das Funktionsmodul 120 an der Aufnahmeeinrichtung 100 angeordnet ist, dann schließt in diesem Ausführungsbeispiel die bündig Moduldichtung 725 mit der Arbeitsplatte 122 ab und/oder liegt dichtend an dem Einsatz 700 an. Auf ihrer Unterseite hat die Basisvorrichtung 115 Gewichtssensoren 715. Damit ist es möglich beispielsweise die Masse einer in den Behälter 124 gegebenen Speise zu erfassen. Die Aufnahmeeinrichtung 100 umfasst auch eine Stabilisierungseinrichtung 125. Die Stabilisierungseinrichtung 125 dient dazu das Funktionsmodul 120 zu fixieren, wenn das Funktionsmodul 120 durch die Durchgangsöffnung in der Arbeitsplatte 122 mit der Basisvorrichtung 115 gekuppelt ist.

Das in dieser Figur gezeigte Ausführungsbeispiel der Aufnahmeeinrichtung 100 verfügt über eine Arretierung des Funktionsmodul 120 an der Basisvorrichtung 115 mittels einer motorisch angetriebenen Stabilisierungseinrichtung 125. Zentrales Element der Stabilisierungseinrichtung 125 sind zwei bewegliche Klemmbacken 801, 802, welche mit dem Funktionsmodul 120 einen Formschluss eingehen können. Hierzu hat jede der Klemmbacken 801, 802 einen Haltekörper 105. In Freigabestellung der Klemmbacken 801, 802 sind die Klemmbacken 801, 802 distanziert zu dem Funktionsmodul 120 angeordnet und das Funktionsmodul 120 kann der Basisvorrichtung 115 entnommen werden. In einer Fixierstellung sind die Klemmbacken 801, 802 anliegend an dem Funktionsmodul 120 angeordnet. Dabei greift jeder der Haltekörper 105 in eine Ausnehmung 130 an dem Funktionsmodul 120 ein. Es ist aber auch möglich, dass an dem Funktionsmodul 120 wenigstens ein Haltekörper vorgesehen ist und die Klemmbacken 801, 802 Ausnehmungen aufweisen, welche in Fixierstellung der Klemmbacken 801, 802 mit dem wenigstens einen Haltekörper an dem Funktionsmodul 120 einen Formschluss eingehen.

Die Stabilisierungseinrichtung 125 weist einen Verriegelungsmotor 840 und einen Verriegelungsantrieb 850 auf. Der Verriegelungsmotor 840 treibt den Verriegelungsantrieb 850 an. Der Verriegelungsmotor 840 und/oder der Verriegelungsantrieb 850 können in ihrer Lage relativ zu der Aufnahmeeinrichtung 100 fixiert sein, beispielsweise durch eine Befestigung an der Aufnahmeeinrichtung 100.

Bevorzugt ist vorgesehen, dass der Verriegelungsmotor 840 und/oder der Verriegelungsantrieb 850 relativ zu der Aufnahmeeinrichtung 100 beweglich ausgeführt sind. Der Verriegelungsantrieb 850 wirkt auf unmittelbar und/oder mittelbar auf die Klemmbacken 801, 802. Zur mittelbaren Wirkung auf die Klemmbacken 801, 802 kann kinematisch zwischen den Klemmbacken 801, 802 und dem Verriegelungsantrieb 850 ein Führungselement 510 vorgesehen sein. Für ein möglichst fehlerfreies Wiegeresultat ist es vorteilhaft, dass die ganze Konstruktion der Stabilisierungseinrichtung 125 nur mit den auf den Gewichtssensoren 715 aufliegenden Teilen verbunden ist.

In der hier gezeigten Ausführungsform ist der Verriegelungsantrieb 850 ein Linearantrieb, welcher die eine Klemmbacke 802 direkt an das Funktionsmodul 120 drückt. Auf der anderen Seite ist der Verriegelungsantrieb 850 kinematisch mit dem Verriegelungsmotor 840 verbunden. Der Verriegelungsmotor 840 kann unmittelbar, insbesondere gelenkig, mit dem Führungselement 510 verbunden sein oder wie hier gezeigt über einen Zusatzantrieb 845 mittelbar mit dem Führungselement 510 verbunden sein, wobei der Zusatzantrieb 845 vorzugsweise gelenkig mit dem Führungselement 510 verbunden ist. Der Verriegelungsmotor 840 und/oder der Verriegelungsantrieb 850 und/oder der Zusatzantrieb 845 können zusammenfassend auch als Stabilisierungsantrieb 515 bezeichnet werden. Die Bewegung des als Linearantrieb ausgeführten Verriegelungsantrieb 850 und/oder Zusatzantriebs 845 ist durch zwei Pfeile angedeutet. Der Stabilisierungsantrieb 515 ist von der Multifunktionsküchenmaschine 110 und insbesondere von dem Antrieb 117 unabhängig ausgebildet.

Das Führungselement 510 ist hier ein flacher Ring, welcher den Aufnahmebereich für das Funktionsmodul 120 umgibt. An dem Führungselement 510 ist die andere Klemmbacke 803 gelenkig angebunden. Die zweite Klemmbacke 803 wird über das ringförmige Führungselement 510 bewegt. Ergänzend ist es möglich, dass die Bewegung der beiden Klemmbacken 801, 802 durch ein Zahnradgetriebe 830 synchronisiert ist.

Bei der Verwendung des Zahnradgetriebes 830 zwischen den Klemmbacken 801, 802 zur Übertragung der Bewegung ist es nicht erforderlich, dass die Verbindung zwischen zweiter Klemmbacke 803 und Führungselement 510 in beide Richtungen wirkt. Die Klemmbacke 803 kann an dem Führungselement 510 auch nur anliegen. Auch kann es möglich sein, bei der Verwendung des Zahnradgetriebes 830 auf das Führungselement 510 gänzlich zu verzichten, wenn beispielsweise der Verriegelungsmotor 840 oder der Zusatzantrieb 845 unmittelbar auf die Aufnahmeeinrichtung 100 wirkt.

Eine andere Alternative zu der gezeigten Ausführungsform sieht vor, dass an dem Funktionsmodul 120 die Ausnehmung 130 als Nut ausgeführt ist, in welche das von dem Verriegelungsmotor 840 bewegbare Führungselement 510 direkt eingreift. Dies ist so zu verstehen, dass das Führungselement 510 zwischen einer Freigabestellung und einer Fixierstellung beweglich ist, wobei das Führungselement 510 nur in der Fixierstellung mit der Ausnehmung 130 des Funktionsmoduls 120 in Eingriff ist.

Die Ausnehmung 130 des Funktionsmoduls 120 kann auch, anders als hier dargestellt, in der Moduldichtung 725 ausgebildet sein.

## Patentansprüche

1. Kochfeld (1400)
mit einer Arbeitsplatte (122)
mit zumindest einer Kochzone (1405),
und einer Multifunktionsküchenmaschine (110) mit einem mobilen Funktionsmodul (120), und zumindest einer Aufnahmevorrichtung (100) zum Aufnehmen des mobilen Funktionsmoduls (120) der Multifunktionsküchenmaschine (110),
wobei die Aufnahmevorrichtung (100) an der Arbeitsplatte (122) befestigt ist und eine Stabilisierungseinrichtung (125) zum Stabilisieren des Funktionsmoduls (120) aufweist,
wobei die Aufnahmevorrichtung (100) vollständig oder zumindest mit mehr als 60 Prozent der Höhenerstreckung der Aufnahmevorrichtung (100) auf einer der Oberfläche der Arbeitsplatte (122) abgewandten Seite des Kochfeldes (1400) angeordnet ist,
wobei die Aufnahmevorrichtung (100) eine Basisvorrichtung (115) der Multifunktionsküchenmaschine (110) umfasst, wobei die Basisvorrichtung (115) einen Antrieb (117) mit einer Antriebswelle (119) zum Antreiben eines rotierbaren Elements (520) des Funktionsmoduls (120) aufweist,
**dadurch gekennzeichnet, dass**
die Stabilisierungseinrichtung (125) mindestens einen beweglichen Haltekörper (105) umfasst, der bei eingesetztem Funktionsmodul (120) in eine Aussparung (130) verfahrbar ist.

2. Kochfeld (1400) gemäß dem vorangegangenen Anspruch, wobei der Haltekörper (105) an der Basisvorrichtung (115) ausgebildet ist und die Aussparung (130) an dem Funktionsmodul (120) ausgebildet ist oder der Haltekörper (105) an dem Funktionsmodul (120) und die Aussparung (130) an der Basisvorrichtung (115) vorgesehen ist.

3. Kochfeld (1400) gemäß dem vorangegangenen Anspruch, wobei die Stabilisierungseinrichtung (125) eine Erhebung (300) aufweist, die ausgeformt ist um bei eingesetztem Funktionsmodul (120) in eine entsprechende Vertiefung (405) am Modulboden (400) des Funktionsmoduls (120) hineinzuragen, wobei die Erhebung (300) um die Antriebswelle (119) oder um eine elektrische Verbindung zwischen Basisvorrichtung (115) und Funktionsmodul (120) ausgebildet ist.

4. Kochfeld (1400) gemäß einem der vorangegangen Ansprüche, mit einem Einsatz (700) zum Abdichten der Basisvorrichtung (115) gegenüber der Arbeitsplatte (122), wobei der Einsatz (700) eine Durchgangsöffnung (717) für die Antriebswelle (119) aufweist und/oder
die Stabilisierungseinrichtung (125) mindestens eine Raste (705) am Einsatz (700) zum Aufnehmen eines am Funktionsmodul (120) angeordneten Haltepins (720) aufweist.

5. Kochfeld (1400) gemäß einem der beiden vorangegangen Ansprüche, mit einem Einsatz (700) zum Abdichten der Basisvorrichtung (115) gegenüber der Arbeitsplatte (122), wobei die Stabilisierungseinrichtung (125) mindestens ein aus dem Einsatz (700) herausragendes Halteelement (900) umfasst, das bei eingesetztem Funktionsmodul (120) in eine entsprechende Fixieröffnung (905) an einer Moduldichtung (725) hineinragt.

6. Kochfeld (1400) gemäß einem der vorangegangenen Ansprüche, wobei die Stabilisierungseinrichtung (125) zumindest eine Ausnehmung (500) zum Aufnehmen eines seitlich am Funktionsmodul (120) angeordneten Haltekörpers (105), insbesondere in Form eines Bolzens (505), und ein drehbares und/oder verschiebbares Führungselement (510) zum Verschließen der Ausnehmung (500) umfasst.

7. Kochfeld (1400) gemäß einem der vorangegangenen Ansprüche, mit einem Stabilisierungsantrieb (515)
zum Bereitstellen eines Drehmoments zum Drehen des Führungselements (510)
und/oder
zum Bereitstellen einer Kraft zum Verschieben des Führungselements (510).

8. Kochfeld (1400) gemäß dem vorangegangenen Anspruch, wobei der Stabilisierungsantrieb (515) ferner zum Antreiben eines rotierbaren Elements (520) des Funktionsmoduls (120) ausgebildet ist.

9. Kochfeld (1400) gemäß einem der vorangegangenen Ansprüche, wobei die Stabilisierungseinrichtung (125) ein Gewinde (1000) zum Verschrauben mit einem Gegengewinde (1005) des Funktionsmoduls (120) umfasst.

10. Kochfeld (1400) gemäß einem der vorangegangenen Ansprüche, wobei die Aufnahmevorrichtung (100) ausgeformt ist einen Griff (121) des Funktionsmoduls (120) zu fixieren.

11. Kochfeld (1400) gemäß einem der vorangegangenen Ansprüche, mit einem Deckel (1300) zum Verschließen einer an der Arbeitsplatte (122) befestigten Aufnahmekammer (710) und/oder zum Verschließen einer Öffnung in der Arbeitsplatte (122), wobei die Aufnahmevorrichtung (100) in der Aufnahmekammer (710) angeordnet ist und ausgebildet ist um bei nicht eingesetztem Funktionsmodul (120) den Deckel (1300) aufzunehmen.

## Claims

1. Hob (1400)
comprising a worktop (122),
at least one cooking zone (1405),
and a multifunctional food processor (110) which has a movable functional module (120), and at least one receiving device (100) for receiving the movable functional module (120) of the multifunctional food processor (110),
the receiving device (100) being fixed to the worktop (122) and having a stabilising apparatus (125) for stabilising the functional module (120),
the receiving device (100) being arranged completely or at least with more than 60 percent of the height extension of the receiving device (100) on a side of the hob (1400) facing away from the surface of the worktop (122),
the receiving device (100) comprising a base device (115) of the multifunctional food processor (110), the base device (115) having a drive (117) with a drive shaft (119) for driving a rotatable element (520) of the functional module (120),
**characterised in that**
the stabilising apparatus (125) comprises at least one movable holding body (105), which can be moved into a recess (130) when the functional module (120) is inserted.

2. Hob (1400) according to the preceding claim, wherein the holding body (105) is formed on the base device (115) and the recess (130) is formed on the functional module (120) or the holding body (105) is provided on the functional module (120) and the recess (130) is provided on the base device (115).

3. Hob (1400) according to the preceding claim, wherein the stabilising apparatus (125) has an elevated region (300), which is shaped to protrude into a corresponding cavity (405) on the module base (400) of the functional module (120) when the functional module (120) is inserted, wherein the elevated region (300) is formed around the drive shaft (119) or around an electrical connection between the base device (115) and the functional module (120).

4. Hob (1400) according to any of the preceding claims, comprising an insert (700) for sealing the base device (115) against the worktop (122), wherein the insert (700) has a through-opening (717) for the drive shaft (119) and/or
the stabilising apparatus (125) has, on the insert (700), at least one catch (705) for receiving a holding pin (720) arranged on the functional module (120).

5. Hob (1400) according to either of the two preceding claims, comprising an insert (700) for sealing the base device (115) against the worktop (122), wherein the stabilising apparatus (125) comprises at least one holding element (900) protruding from the insert (700), which holding element protrudes into a corresponding fixing opening (905) on a module seal (725) when the functional module (120) is inserted.

6. Hob (1400) according to any of the preceding claims, wherein the stabilising apparatus (125) comprises at least one cutout (500) for receiving a holding body (105) arranged laterally on the functional module (120), in particular in the shape of a bolt (505), and a rotatable and/or movable guide element (510) for closing the cutout (500).

7. Hob (1400) according to any of the preceding claims, comprising a stabilising drive (515)
for providing a torque for rotating the guide element (510) and/or
for providing a force for moving the guide element (510).

8. Hob (1400) according to the preceding claim, wherein the stabilising drive (515) is further designed to drive a rotatable element (520) of the functional module (120).

9. Hob (1400) according to any of the preceding claims, wherein the stabilising apparatus (125) comprises a thread (1000) for screwing to a counter thread (1005) of the functional module (120).

10. Hob (1400) according to any of the preceding claims, wherein the receiving device (100) is shaped to fix a handle (121) of the functional module (120).

11. Hob (1400) according to any of the preceding claims, comprising a lid (1300) for closing a receiving chamber (710) fixed to the worktop (122) and/or for closing an opening in the worktop (122), wherein the receiving device (100) is arranged in the receiving chamber (710) and is designed to receive the lid (1300) when the functional module (120) is not inserted.

## Revendications

1. Plaque de cuisson (1400)
comportant un plan de travail (122)
comportant au moins une zone de cuisson (1405),
et un robot ménager multifonction (110) comportant un module fonctionnel (120) mobile, et au moins un dispositif de réception (100) destiné à recevoir le module fonctionnel (120) mobile du robot ménager multifonction (110),
dans laquelle le dispositif de réception (100) est fixé au plan de travail (122) et présente un appareil de stabilisation (125) permettant de stabiliser le module fonctionnel (120),
dans laquelle le dispositif de réception (100) est disposé, entièrement ou au moins à plus de 60 pour cent de l'extension en hauteur du dispositif de réception (100), sur un côté de la plaque de cuisson (1400) opposé à la surface du plan de travail (122),
dans laquelle le dispositif de réception (100) comprend un dispositif formant base (115) du robot ménager multifonction (110), dans laquelle le dispositif formant base (115) présente un entraînement (117) comportant un arbre d'entraînement (119) pour l'entrainement d'un élément rotatif (520) du module fonctionnel (120),
**caractérisée en ce que**
l'appareil de stabilisation (125) comprend au moins un corps de retenue (105) mobile qui peut être déplacé dans un évidement (130) lorsque le module fonctionnel (120) est inséré.

2. Plaque de cuisson (1400) selon la revendication précédente, dans laquelle le corps de retenue (105) est réalisé sur le dispositif formant base (115) et l'évidement (130) est réalisé sur le module fonctionnel (120) ou le corps de retenue (105) est prévu sur le module fonctionnel (120) et l'évidement (130) est prévu sur le dispositif formant base (115).

3. Plaque de cuisson (1400) selon la revendication précédente, dans laquelle l'appareil de stabilisation (125) présente un bossage (300) qui est formé pour faire saillie, lorsque le module fonctionnel (120) est inséré, dans un renfoncement (405) correspondant sur le fond de module (400) du module fonctionnel (120), dans laquelle le bossage (300) est réalisé autour de l'arbre d'entraînement (119) ou autour d'un moyen de liaison électrique entre le dispositif formant base (115) et le module fonctionnel (120).

4. Plaque de cuisson (1400) selon l'une des revendications précédentes, comportant un insert (700) permettant de rendre étanche le dispositif formant base (115) par rapport au plan de travail (122), dans laquelle l'insert (700) présente une ouverture de passage (717) pour l'arbre d'entraînement (119) et/ou
l'appareil de stabilisation (125) présente au moins un cran (705) sur l'insert (700) pour la réception d'une broche de retenue (720) disposée sur le module fonctionnel (120).

5. Plaque de cuisson (1400) selon l'une des deux revendications précédentes, comportant un insert (700) permettant de rendre étanche le dispositif formant base (115) par rapport au plan de travail (122), dans laquelle l'appareil de stabilisation (125) comprend au moins un élément de retenue (900) faisant saillie depuis l'insert (700), lequel élément de retenue, lorsque le module fonctionnel (120) est inséré, fait saillie dans une ouverture de fixation (905) correspondante sur un joint de module (725).

6. Plaque de cuisson (1400) selon l'une des revendications précédentes, dans laquelle l'appareil de stabilisation (125) comprend au moins un évidement (500) pour la réception d'un corps de retenue (105) disposé latéralement sur le module fonctionnel (120), en particulier sous la forme d'un boulon (505), et un élément de guidage (510) rotatif et/ou coulissant pour la fermeture de l'évidement (500).

7. Plaque de cuisson (1400) selon l'une des revendications précédentes, comportant un entraînement de stabilisation (515)
pour la fourniture d'un couple de rotation permettant de faire tourner l'élément de guidage (510) et/ou
pour la fourniture d'une force permettant de faire coulisser l'élément de guidage (510).

8. Plaque de cuisson (1400) selon la revendication précédente, dans laquelle l'entraînement de stabilisation (515) est en outre réalisé pour entraîner un élément rotatif (520) du module fonctionnel (120).

9. Plaque de cuisson (1400) selon l'une des revendications précédentes, dans laquelle l'appareil de stabilisation (125) comprend un filetage (1000) destiné à être vissé avec un contre-filetage (1005) du module fonctionnel (120).

10. Plaque de cuisson (1400) selon l'une des revendications précédentes, dans laquelle le dispositif de réception (100) est formé pour fixer une poignée (121) du module fonctionnel (120).

11. Plaque de cuisson (1400)selon l'une des revendications précédentes, comportant un élément de recouvrement (1300) permettant de fermer une chambre de réception (710) fixée sur le plan de travail (122) et/ou permettant de fermer une ouverture dans le plan de travail (122), dans laquelle le dispositif de réception (100) est disposé dans la chambre de réception (710) et est réalisé pour recevoir l'élément de recouvrement (1300) lorsque le module fonctionnel (120) n'est pas inséré.
